# EUROPEAN PATENT SPECIFICATION

(11) **EP 3 527 442 B1**
(45) Date of publication and mention of the grant of the patent: **03.11.2021**
(21) Application number: 17859693.8
(22) Date of filing: 13.04.2017
(51) Int. Cl.: B60T 7/10, G05G 1/04, G05G 1/06

(54) **PARKING BRAKE LEVER APPARATUS**
FESTSTELLBREMSHEBELVORRICHTUNG
APPAREIL DE LEVIER DE FREIN DE STATIONNEMENT

(30) Priority: 13.10.2016 JP 2016201430
(43) Date of publication of application: 21.08.2019
(73) Proprietor: Toyoda Iron Works Co., Ltd., Toyota-shi Aichi 471-8507 (JP)
(72) Inventor: RYUTAKI, Kozo, Toyota-shi Aichi 471-8507 (JP); MATSUBO, Hideki, Toyota-shi Aichi 471-8507 (JP); ODA, Komei, Toyota-shi Aichi 471-8507 (JP); MIYABAYASHI, Takashi, Toyota-shi Aichi 471-8507 (JP)
(74) Representative: TBK
(86) International application number: PCT/JP2017/015058
(87) International publication number: WO 2018/070068

(56) References cited:
- JP-A- 2003 083 490
- JP-A- 2013 001 137
- JP-A- 2016 097 732
- JP-U- S6 451 036
- JP-U- H03 108 572
- JP-U- H04 123 864
- US-A1- 2014 245 854

## Description

The present invention relates to a parking brake lever device including a release rod having a circular cross section according to the preamble of claim 1, the features of which are known from Document JP H04 - 123 864 U.

Conventionally, for example, the below document JP H02 - 92369 U and document JP H06 - 42259 U disclose a technique relating to a parking brake lever device including a release rod having a circular cross section. In the technique disclosed in document JP H06 - 42259 U, a female screw corresponding to a male screw of the release rod is formed at the axial center of one end part of a release knob. When the release knob is inserted into a socket of a fastening device and the socket is rotationally driven, the release knob is also rotationally driven following the rotational driving of the socket, and then the release knob is screwed into the male screw of the release rod.

### Problems to be solved by the Invention

However, since the release rod and the release knob are assembled by a screwing-in system, the number of assembled steps is large, and the equipment cost for assembling has been generated. Further, positioning of the release knob is not able to be performed in the rotation direction in assembling by screwing. Accordingly, when the release knob is what is called a slant knob in which a lower part of the front end surface is protruded forward, the slant knob is not able to deal with the directivity of the release knob, and thus assembling the release knob in a correct posture has been difficult.

The present invention is made in the context of circumstances mentioned above, and its object is to provide a parking brake lever device capable of reducing the number of assembled steps and an equipment cost for assembling a release rod having a circular cross section and a release knob, and assembling what is called a slant knob to the release rod having the circular cross section in a correct posture.

The object of the invention is achieved by a parking brake leveer device according to claim 1. Advantageous embodiments are performed according to the dependent claim.

A parking brake lever device includes: a release rod configured to include a circular cross section; a rotation stop part configured to include a non-circular cross section and formed in a part of the release rod; a retaining part provided to the release rod so as to project in a radial direction of the release rod; a release knob to which a front end part of the release rod is attached; a loosely fitting part for rotation stop provided in the release knob and loosely fitting the rotation stop part of the release rod; and a loosely fitting part for retention provided in the release knob and loosely fitting the retaining part of the release rod, a lid part to be engaged with the release knob, wherein the lid part includes: a first closure part configured to cover the loosely fitting part for rotation stop and the loosely fitting part for retention in the release knob from a first opening part side by closing the first opening part of the release knob into which the front end part of the release rod is inserted when the front end part of the release rod is attached to the release knob; and a second closure part continuously provided to the first closure part in a bent state and closing a second opening part of the release knob toward which the release rod attached to the release knob extends, and wherein the second closure part includes an insertion part into which the release rod is inserted.

The release knob can include: a first engaging part provided on a first inner wall surface arranged from an end edge of the first opening part toward the loosely fitting part for rotation stop or the loosely fitting part for retention; and a second engaging part provided on a second inner wall surface arranged from an end edge of the second opening part toward the loosely fitting part for rotation stop or the loosely fitting part for retention, and wherein the lid part includes: a first engaged part provided in the first closure part and engaged with the first engaging part of the release knob; and the second engaged part provided in the second closure part and engaged with the second engaging part of the release knob. In the parking brake lever device, when the front end part of the release rod is attached to the release knob, the rotation stop part of the release rod is loosely fitted into the loosely fitting part for rotation stop in the release knob, and the retaining part of the release rod is loosely fitted into the loosely fitting part for retention in the release knob. Accordingly, the number of assembled steps and the equipment cost for assembling the release rod having the circular cross section and the release knob can be reduced. Further, the release knob can be prevented from pulling out from the release rod having the circular cross section as well as rotating with respect to the release rod.

Especially, when the release knob is what is called the slant knob, the slant knob can be assembled to the release rod having the circular cross section in a correct posture by preventing the release knob from rotating.

When the lid part is engaged with the release knob to which the release rod is attached, the first closure part of the lid part covers the loosely fitting part for rotation stop and the loosely fitting part for retention in the release knob, and the release rod is inserted into the insertion part of the second closure part in the lid part. As a result, the lid part engaged with the release knob can restrict the attaching position of the release knob to the release rod and can also prevent the release knob from pulling out from the release rod.

When the first engaged part of the lid part is engaged with the first engaging part of the release knob and the second engaged part of the lid part is engaged with the second engaging part of the release knob, rattling of the lid part can be prevented. Further, an operator can confirm whether the lid part is correctly assembled to the release knob based on a noise or a vibration etc. generated at the engagement.

### BRIEF DESCRIPTION OF DRAWINGS

FIG. 1 is a side view illustrating a parking brake lever device according to the first embodiment;
FIG. 2 is an exploded perspective view illustrating the parking brake lever device;
FIG. 3 is an exploded perspective view excerpted from one part of components of the parking brake lever device;
FIG. 4 is a three-view drawing illustrating a release rod forming the parking brake lever device; i.e. FIG. 4 (a) is a plan view; FIG. 4 (b) is a front view; and FIG. 4 (c) is a side view;
FIG. 5 is a three-view drawing illustrating a slant knob member forming the parking brake lever device; i.e. FIG. 5 (a) is a plan view; FIG. 5 (b) is a front view; and FIG. 5 (c) is a side view;
FIG. 6 is a three-view drawing illustrating a lid member forming the parking brake lever device; i.e. FIG. 6 (a) is a plan view; FIG. 6 (b) is a front view; and FIG. 6 (c) is a side view;
FIG. 7 is a plan view illustrating an assembled state of the release rod and the slant knob member forming the parking brake lever device;
FIG. 8 is a perspective view illustrating the assembled state of the release rod and the slant knob member forming the parking brake lever device;
FIG. 9 is a plan view illustrating an assembled state of the release rod, the slant knob member, and the lid member forming the parking brake lever device;
FIG. 10 is a perspective view illustrating the assembled state of the release rod, the slant knob member, and the lid member forming the parking brake lever device;
FIG. 11 is a perspective view illustrating an assembled state of the release rod, the slant knob member, the lid member, and a compression coil spring forming the parking brake lever device;
FIG. 12 is a three-view drawing illustrating a slant knob member forming the parking brake lever device according to the second embodiment; i.e. FIG. 12 (a) is a plan view; FIG. 12 (b) is a front view; and FIG. 12 (c) is a side view;
FIG. 13 is a three-view drawing illustrating a lid member forming the parking brake lever device according to the second embodiment; i.e. FIG. 13 (a) is a plan view; FIG. 13 (b) is a front view; and FIG. 13 (c) is a side view;
FIG. 14 is a plan view illustrating an assembled state of a release rod and the slant knob member forming the parking brake lever device;
FIG. 15 is a perspective view illustrating the assembled state of the release rod and the slant knob member forming the parking brake lever device;
FIG. 16 is a plan view illustrating an assembled state of the release rod, the slant knob member, and the lid member forming the parking brake lever device;
FIG. 17 is a perspective view illustrating the assembled state of the release rod, the slant knob member, and the lid member forming the parking brake lever device; and
FIG. 18 is a perspective view illustrating an assembled state of the release rod, the slant knob member, the lid member, and a compression coil spring forming the parking brake lever device.

Hereinafter, a parking brake lever device of the present invention will be described with reference to drawings based on a concrete embodiment. Incidentally, a front-and-rear direction, an up-and-down direction, and a right-and-left direction of the parking brake device are explained based on the definition of the front-and-rear direction, the up-and-down direction, and the right-and-left direction illustrated in the drawings. And, the detailed explanation of the conventional technique of the parking brake device excluding the matters specifying the present invention may be omitted.

### 1.The First Embodiment

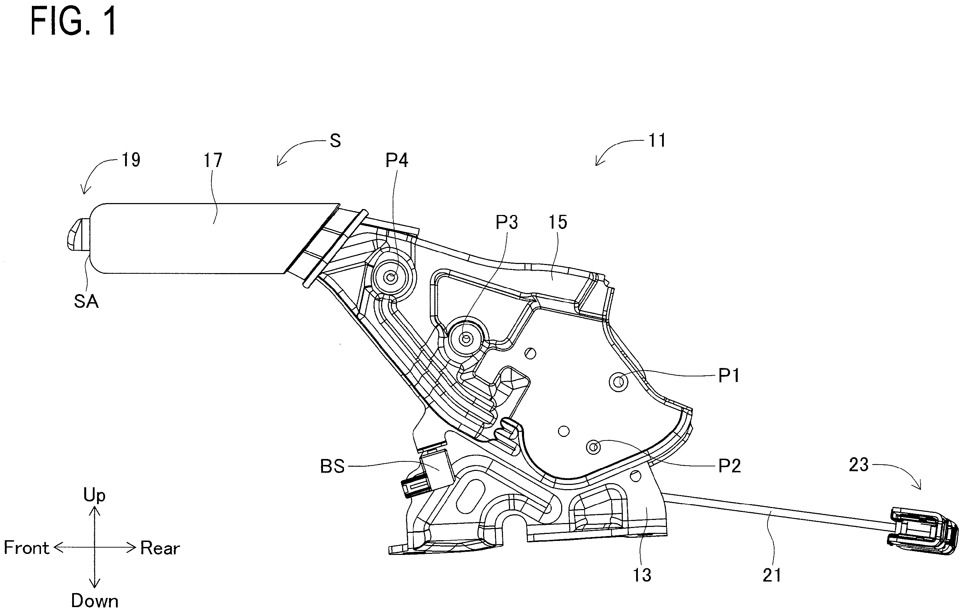

Hereinafter, the first embodiment of the parking brake lever device according to the present invention will be described in detail with reference to the FIGs. 1 to 11.

### [1.-1 Outline of the Parking Brake Lever Device]

As illustrated in FIG. 1, a parking brake lever device 11 according to the present embodiment includes a sector 13, a lever body 15, a grip member 17, a release knob 19, a brake cable 21, an equalizer device 23, and a parking brake switch BS etc.

The sector 13 is a member having a substantially flat plate shape and is substantially vertically fixed to a floor of a vehicle (not illustrated). In the sector 13, the lever body 15 is pivotally supported via support pins P1, P2. A front end part of the lever body 15 is formed into a substantially cylindrical shape, and the grip member 17 is fitted therein. The front end part of the lever body 15 and the grip member 17 form an operation part S and is held by a driver when the lever body 15 is pivoted. The release knob 19 is protrudingly arranged in a front end part SA of the operation part S.

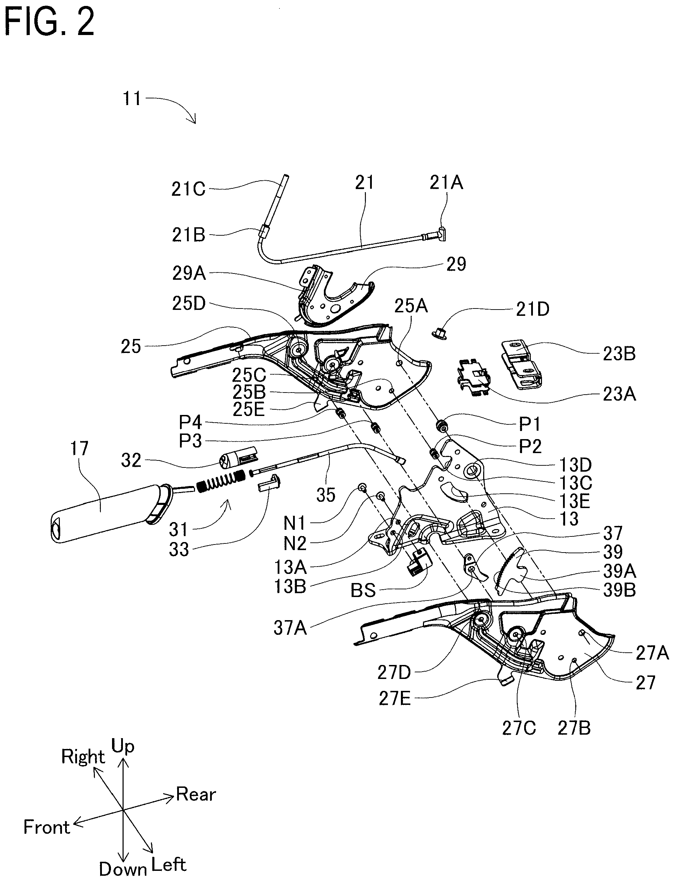

A front end part of the brake cable 21 is connected to the lever body 15 via a cable guide 29 illustrated in FIG. 2 described later. A rear end part of the brake cable 21 is connected to the equalizer device 23. Thus, the brake cable 21 can transmit a pivoting operation force of the lever body 15 to the equalizer device 23. The equalizer device 23 equalizes and transmits the pivoting operation force of the lever body 15 to right and left parking brakes of a vehicle (not illustrated). That is, a driver can actuate or release the right and left parking brakes of a vehicle (not illustrated) by pivoting the lever body 15 clockwise or counterclockwise in FIG. 1.

The parking brake switch BS detects whether the right and left parking brakes of the vehicle (not illustrated) is actuated or not by switching on and off of a contact. Incidentally, reference signs P3, P4 are support pins.

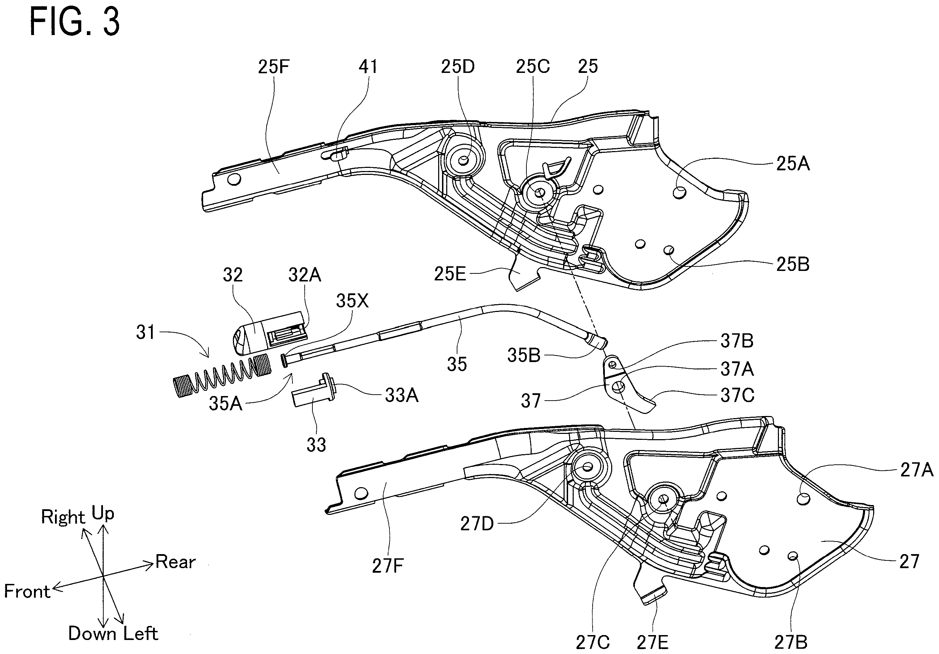

As illustrated in FIGs. 2 and 3, the parking brake lever device 11 according to the present embodiment includes a synthetic resin member 23A, an equalizer body 23B, a first half-cut body 25, a second half-cut body 27, and the cable guide 29 in addition to the sector 23, the grip member 17, the brake cable 21, and the parking brake switch BS.

The synthetic resin member 23A and the equalizer body 23B form the above-mentioned equalizer device 23. The synthetic resin member 23A is incorporated into the equalizer body 23B. The rear end part of the brake cable 21 is inserted into the equalizer body 23B via the synthetic resin member 23A. An engagement member 21A is provided at the rear end part of the brake cable 21. The rear end part of the brake cable 21 is connected to the equalizer device 23 by engaging the engagement member 21A of the brake cable 21 with the equalizer body 23B.

The first half-cut body 25 and the second half-cut body 27 form the above-mentioned lever body 15. Pin holes 25A, 25B, 25C, 25D and a flange part 25E are provided in the first half-cut body 25. Pin holes 27A, 27B, 27C, 27D, and a flange part 27E are provided in the second half-cut body 27.

The cable guide 29 has a cable groove 29A on a left side surface (inner surface) of the cable guide 29. The left side surface (inner surface) of the cable guide 29 is welded to a right side surface (outer surface) of the first half-cut body 25 in a state superimposed with each other. By this welding, a lower end opening to be communicated with the cable groove 29A is formed at the front lower end of the cable guide 29, and an upper end opening to be communicated with the cable groove 29A is formed at the front upper end of the cable guide 29. A bolt shaft 21C joined with the front end part of the brake cable 21 through a caulking member 21B is inserted into the lower end opening formed at the front lower end of the cable guide 29. The bolt shaft 21C passes through the cable groove 29A and protrudes from the upper end opening formed at the front upper end part of the cable guide 29. A nut member 21D is screw-fitted into a protrusion part of the bolt shaft 21C. Thus, the front end part of the brake cable 21 is connected to the lever body 15.

Further, the parking brake lever device 11 according to the present embodiment includes a compression coil spring 31, a slant knob member 32, a lid member 33, a release rod 35, a pole 37, and a ratchet 39.

The compression coil spring 31 biases the above-mentioned release knob 19 toward the front direction. The release knob 19 is formed the slant knob member 32 and the lid member 33. Incidentally, assembly of the compression coil spring 31, the slant knob member 32, the lid member 33, the release rod 35, and the pole 37 etc. will be described later. The ratchet 39 is a member having a substantially flat plate shape and is provided with a protrusion part 39A and a teeth part 39B.

The sector 13 is provided with fixing pin holes 13A, 13B, a cut part 13C, a pivoting pin hole 13D, and a guiding pin hole 13E. The parking brake switch BS is fixed to the sector 13 by screwing screw members N1, N2 into the parking brake switch BS through the fixing pin holes 13A, 13B. The protrusion part 39A of the ratchet 39 is caulked at the cut part 13C. Thus, the ratchet 39 is fixed to the sector 13.

The support pin P1 is fitted through the pivoting pin hole 13D. A right end part of the support pin P1 is caulked from the right side surface (outer surface) of the first half-cut body 25 in a state where the right end part of the support pin P1 is passed through the pin hole 25A of the first half-cut body 25. A left end part of the support pin P1 is caulked from a left side surface (outer surface) of the second half-cut body 27 in a state where the left end part of the support pin P1 is passed through the pin hole 27A of the second half-cut body 27.

The guiding pin hole 13E is formed into an arc shape with the pivoting pin hole 13D as a center. The support pin P2 is fitted through the guiding pin hole 13E. A right end part of the support pin P2 is caulked from the right side surface (outer surface) of the first half-cut body 25 in a state where the right end part of the support pin P2 is passed through the pin hole 25B of the first half-cut body 25. A left end part of the support pin P2 is caulked from the left side surface (outer surface) of the second half-cut body 27 in a state where the left end part of the support pin P2 is passed through the pin hole 27B of the second half-cut body 27.

Thus, the lever body 15 formed by the first half-cut body 25 and the second half-cut body 27 is pivotally supported via the support pins P1, P2 in the sector 13. Incidentally, the support pin P1 functions as a pivoting shaft of the lever body 15.

Further, the pole 37 is pivotally supported via a support pin P3 in the lever body 15 formed by the first half-cut body 25 and the second half-cut body 27. Accordingly, the support pin P3 is fitted through a pivoting pin hole 37A provided at the substantial center of the pole 37. A right end part of the support pin P3 is caulked from the right side surface (outer surface) of the first half-cut body 25 in a state where the right end part of the support pin P3 is passed through the pin hole 25C of the first half-cut body 25. A left end part of the support pin P3 is caulked from the left side surface (outer surface) of the second half-cut body 27 in a state where the left end part of the support pin P3 is passed through the pin hole 27 C of the second half-cut body 27. Incidentally, the support pin P3 functions as a pivoting shaft of the pole 37.

And, the first half-cut body 25 and the second half-cut body 27 are integrated by the support pin P4. Accordingly, a right end part of the support pin P4 is caulked from the right side surface (outer surface) of the first half-cut body 25 in a state where the right end part of the support pin P4 is passed through the pin hole 25D of the first half-cut body 25. A left end part of the support pin P4 is caulked from the left side surface (outer surface) of the second half-cut body 27 in a state where the left end part of the support pin P4 is passed through the pin hole 27D of the second half-cut body 27. Incidentally, the first half-cut body 25 and the second half-cut body 27 forming the lever body 15 are also integrated by the support pins P1, P2, and P3.

In this manner, the flange part 25E of the first half-cut body 25 and the flange part 27E of the second half-cut body 27 are integrated by integrating the first half-cut body 25 and the second half-cut body 27 as described above, and the sector 13, the compression coil spring 31, the slant knob member 32, the lid member 33, the release rod 35, the pole 37, and the ratchet 39 are incorporated into the lever body 15.

The integrated flange parts 25E, 27E switch on and off of a contact of the parking brake switch BS by pressure contacting or separating from the contact in response to the pivoting of the lever body 15.

As illustrated in FIG. 3, a hosing part 32A is provided with the slant knob member 32. The lid member 33 is engaged with the housing part 32A. A spring receiving part 33A is provided on a rear side surface of the lid member 33. A retaining part 35X is protruded at a front end part 35A of the release rod 35.

A coupling protrusion 35B is provided at a rear end part of the release rod 35. A coupling hole 37B is provided at an upper end part of the pole 37. The coupling protrusion 35B of the release rod 35 is engaged into the coupling hole 37B. Thus, the rear end part of the release rod 35 and the upper end part of the pole 37 are coupled with each other. A pawl 37 C is provided at a lower end part of the pole 37. The pawl 37C is engaged with the teeth part 39B of the ratchet 39. A front end part 25F of the first half-cut body 25 is provided with a substantial L-shaped locking pawl 41 by cutting and raising a plane portion.

The compression coil spring 31 is inserted into the release rod 35 from the front end part 35A of the release rod 35. The front end part 35A of the release rod 35 is housed into the housing part 32A of the slant knob member 32 together with the retaining part 35X provided at the front end part 35A. In the housing part 32A of the slant knob member 32, the retaining part 35X of the release rod 35 is engaged. Further, the lid member 33 is engaged with the housing part 32A of the slant knob member 32. Thus, the front end part 35A of the release rod 35 is coupled to the release knob 19 formed by the slant knob member 32 and the lid member 33. Incidentally, the detailed explanation on the attaching structure for the release rod 35 and the engaging structure for the lid member 33 will be described later. A first end part of the compression coil spring 31 is mounted in the spring receiving part 33A of the lid member 33. A second end part of the compression coil spring 31 is locked in the locking pawl 41 of the first half-cut body 25. Thus, the compression coil spring 31 is slightly in a compressed state, generating a restoration force. The release knob 19 formed by the slant knob member 32 and the lid member 33 is biased toward the front direction by the restoration force of the compression coil spring 31. Further, the pole 37 is biased counterclockwise in FIG. 3 through the release rod 35 by the restoration force of the compression coil spring 31, engaging the pawl 37C of the pole 37 with the teeth part 39B of the ratchet 39.

When the first half-cut body 25 and the second half-cut body 27 are integrated in the above-mentioned state, the front end part of the lever body 15 is formed into a substantial cylindrical shape by overlapping the front end part 25F of the first half-cut body 25 and the front end part 27F of the second half-cut body 27 with each other. Further, the release knob 19 is protruded from the front end part SA of the operation part S when the grip member 17 is mounted at the front end part of the lever body 15. When a driver performs push-in operation of the release knob 19, the release rod 35 moves toward the pole 37, and the pole 37 moves clockwise in FIGs. 2 and 3, separating the pawl 37C of the pole 37 from the teeth 39B of the ratchet 39. Accordingly, the driver can perform the pivoting operation of the lever body 15. In contrast, when the driver releases the push-in operation of the release knob 19, the release rod 35 moves toward the release knob 19, and the pole 37 moves counterclockwise in FIGs. 2 and 3 following the protrusion of the release knob 19 from the front end part SA of the operation part S, engaging the pawl 37C of the pole 37 with the teeth 39B of the ratchet 39. Accordingly, the position of the lever body 15 can be held.

### 1.-2 Structure of the Release Rod

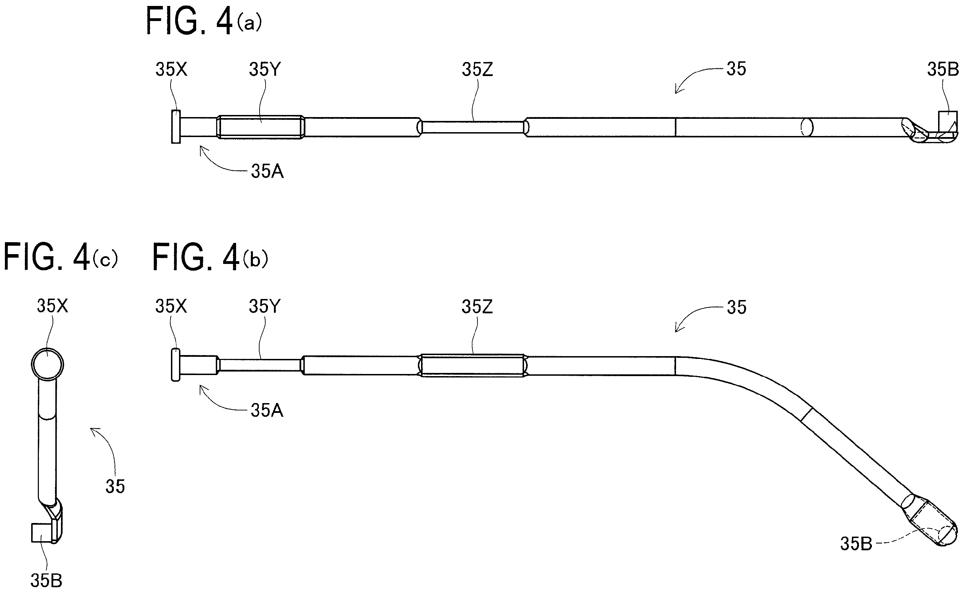

As illustrated in FIG. 4, the release rod 35 is a rod-shaped member, and a cross section thereof is a complete circular shape. As described above, the release rod 35 includes the retaining part 35X and the coupling protrusion 35B. The retaining part 35X is formed into a disk shape protruded in a radial direction of the release rod 35 by casting a front end surface of the release rod 35. The release rod 35 includes a rotation stop part 35Y and an avoidance part 35Z. The rotation stop part 35Y and the avoidance part 35Z are formed into a flat plate shape by press-working parts of the release rod 35 respectively. Accordingly, each of the cross sections of the rotation stop part 35Y and the avoidance part 35Z is formed into a substantial rectangular and non-circular shape. Incidentally, the rotation stop 35 Y and the avoidance part 35Z are in a positional relationship in which both planes intersect perpendicularly. The rotation stop part 35Y is adjacent to the retaining part X formed on the front end surface of the release rod 35. Accordingly, the retaining part 35X and the rotation stop part 35Y are provided at the front end part 35A of the release rod 35.

### 1.-3 Structure of the Slant Knob Member

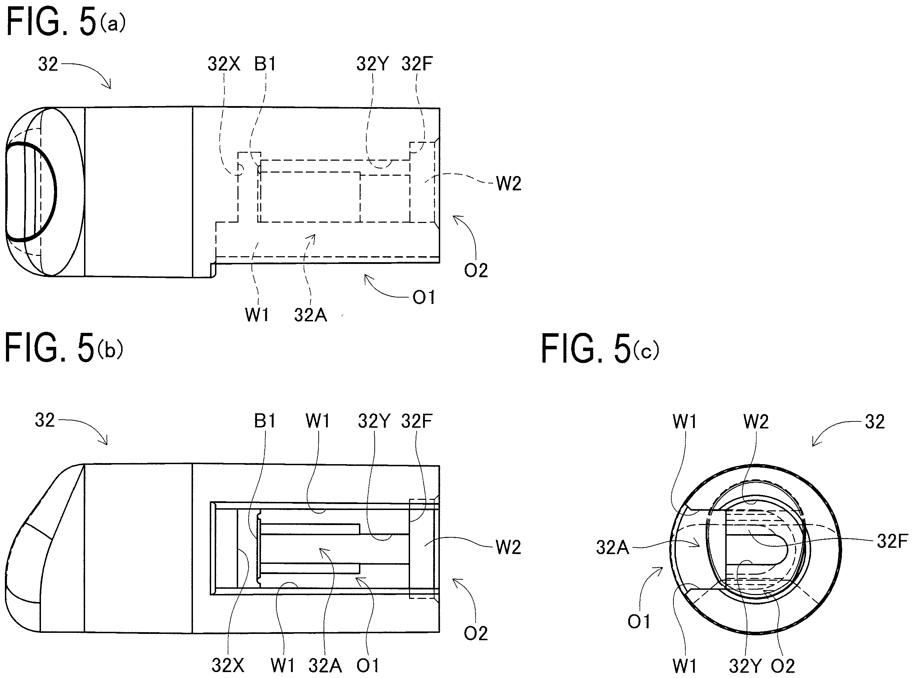

As illustrated in FIG. 5, the slant knob member 32 has a substantial cylindrical shape, and is made of a resin. One end surface of the slant knob member 32 has a slant shape whose lower part of protrudes outside, and corresponds to the front end surface of the release knob 19. Accordingly, the release knob 19 is what is called a slant knob.

A first opening part 01 is formed on a side surface of the slant knob member 32. A second opening part O2 continuously provided to the first opening part 01 is formed on the other end surface opposite to the one end surface of the slant knob member 32. The first opening part O1 and the second opening part O2 are openings of the housing part 32A provided inside the slant knob member 32. The housing part 32A of the slant knob member 32 is formed by a first inner wall surface W1 arranged from an end edge of the first opening 01 toward the inside of the slant knob member 32 and a second inner wall surface W2 arranged from an end edge of the second opening part O2 toward the inside of the slant knob member 32 etc..

The first inner wall surface W1 is formed into a plane. The second inner wall surface W2 is a curved surface formed when a circular arc with an axis of the slant knob member 32 having a substantial cylindrical shape as a center moves along the axis.

A loosely fitting part for retention 32X is provided inside the housing part 32 A of the slant knob member 32. The loosely fitting part for retention 32X is formed into a groove shape having a substantial semicircle, and is formed along a radial direction of the slant knob member 32 having the substantial cylindrical shape. Further, a loosely fitting part for rotation stop 32 Y is provided inside the housing part 32 A of the slant knob member 32. The loosely fitting part for rotation stop 32 Y is formed into a groove shape, and is formed along an axial direction of the slant knob member 32 having the substantial cylindrical shape. The loosely fitting part for retention 32 X and the loosely fitting part for rotation stop 32 Y are communicated with each other inside the housing part 32 A of the slant knob member 32.

A fitting part 32F formed into a recessed part having a substantial cylindrical shape by the second inner wall surface W2 etc. is provided in the hosing part 32A of the slant knob member 32. The fitting part 32F is continuously provided to the second opening part O2 and is communicated with the loosely fitting part for rotation stop 32Y in the housing part 32A of the slant knob member 32.

As described above, the first inner wall surface W1 is arranged from the end edge of the first opening part 01 toward the loosely fitting part for retention 32X or the loosely fitting part for rotation stop 32Y. The second inner wall surface W2 is arranged from the end edge of the second opening part O2 toward the loosely fitting part for rotation stop 32Y furthermore the loosely fitting part for retention 32X.

The loosely fitting part for retention 32 X is provided with a first bead part B1 in the housing part 32 A of the slant knob member 32. The first bead part B1 is formed into a linear shape having a substantially U shape and is provided so as to slenderly protrude on a wall surface forming the loosely fitting part for retention 32 X in the wall surface direction. The first bead part B1 is made of a resin same as the slant knob member 32, and is formed simultaneously with the time of forming the slant knob member 32.

### 1.-4 Structure of the Lid Member

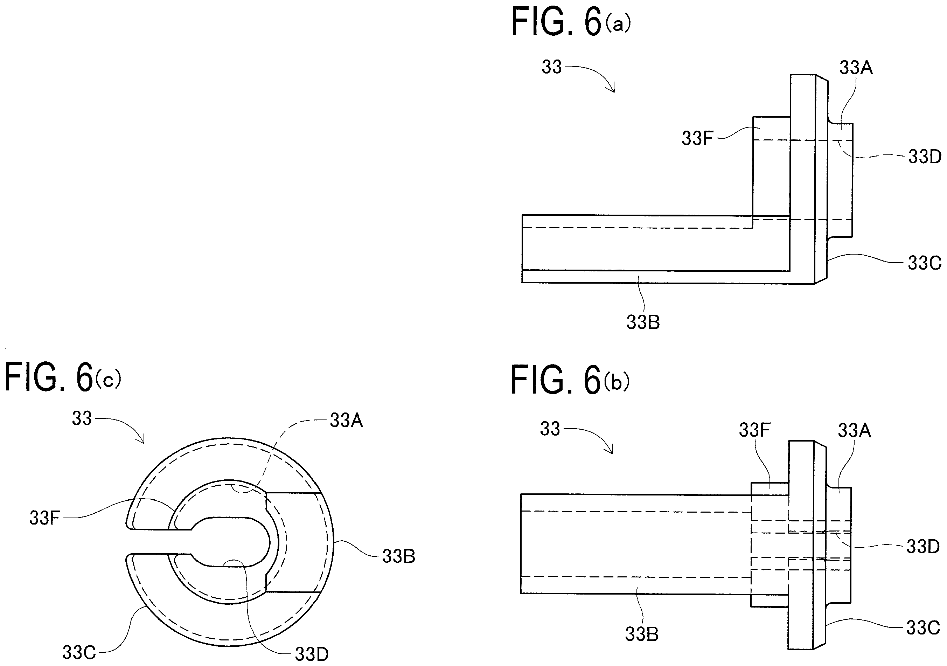

As illustrated in FIG. 6, the lid member 33 includes a first closure part 33 B and a second closure part 33C. The first closure part 33B is formed into a curved plate shape. The second closure part 33C is formed into a disk shape, and is provided continuously from one end part of the first closure part 33B in a perpendicularly bent state.

The second closure part 33C is provided with the spring receiving part 33A on a side opposite to the first closure part 33B. Further, in the second closure part 33C, a protruding wall part 33F formed into a protruding part having a substantial cylindrical shape is provided on the first closure part 33B side. An exterior wall surface of the protruding wall part 33F has a shape corresponding to an inner wall surface of the fitting part 32 F of the slant knob member 32.

The second closure part 33 C is provided with a substantial slit-shaped insertion part 33D. The insertion part 33D is formed so as to cut out the spring receiving part 33A and the protruding wall part 33F from the side opposite to the first closure part 33B.

### 1.-5 Assembly Process

Next, one example of the assembly process of the parking brake lever device 11 according to the present embodiment will be described. Incidentally, in the below explanation, components such as the release rod 35, the release knob 19, and the compression coil spring 31 etc. are arranged and assembled between the first half-cut body 25 and the second half-cut body 27.

Firstly, the first half-cut body 25 forming a right side part of the lever body 15 is arranged on a worktable such that a left side surface (inner surface) of the first half-cut body 25 faces upward. And, the release rod 35 is inserted into the compression coil spring 31 from the retaining part 35X side. Next, the release rod 35 and the release knob 19 are respectively arranged at prescribed positions on the first half-cut body 25 placed on the worktable. Specifically, firstly, the slant knob member 32 forming the release knob 19 is arranged at the front end part 25F of the first half-cut body 25 in a state where the housing part 32 A on a side surface of the slant knob member 32 opens upward (left side in FIG. 3). Next, the release rod 35 is arranged at a prescribed position of the first half-cut body 25 such that the release rod 35 into which the compression coil spring 31 is being inserted is laminated from the upper side (the left side in FIG. 3).

At this time, the front end part 35 A of the release rod 35 is inserted into the first opening 01 of the slant knob member 32. After that, in the housing part 32 A of the slant knob member 32, the retaining part 35X of the release rod 35 is pushed into the loosely fitting part for retention 32X, and a front part of the rotation stop part 35Y of the release rod 35 is pushed into the loosely fitting part for rotation stop 32Y.

When the retaining part 35X of the release rod 35 is pushed into the loosely fitting part for retention 32X, the first bead part B1 of the loosely fitting part for retention 32X is crushed by the retaining part 35X of the release rod 35.

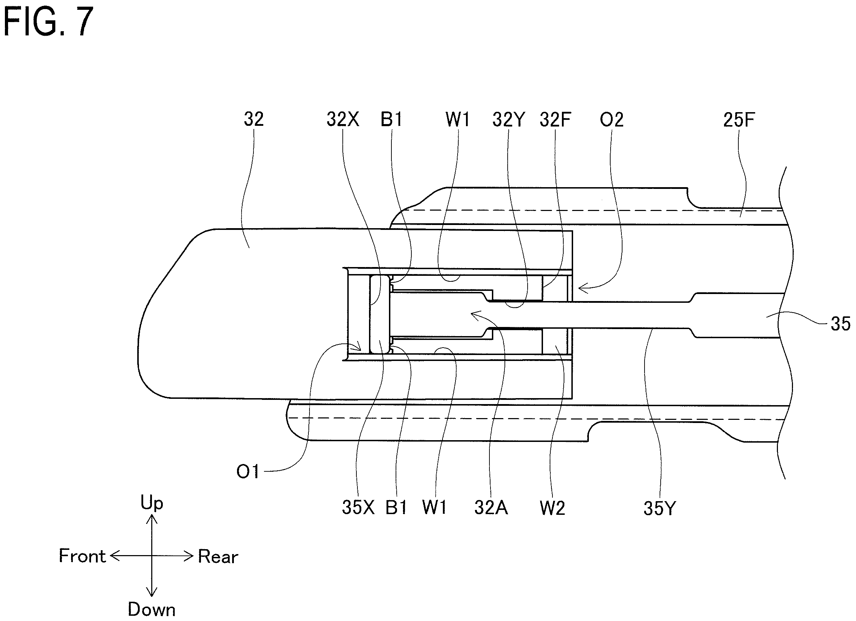

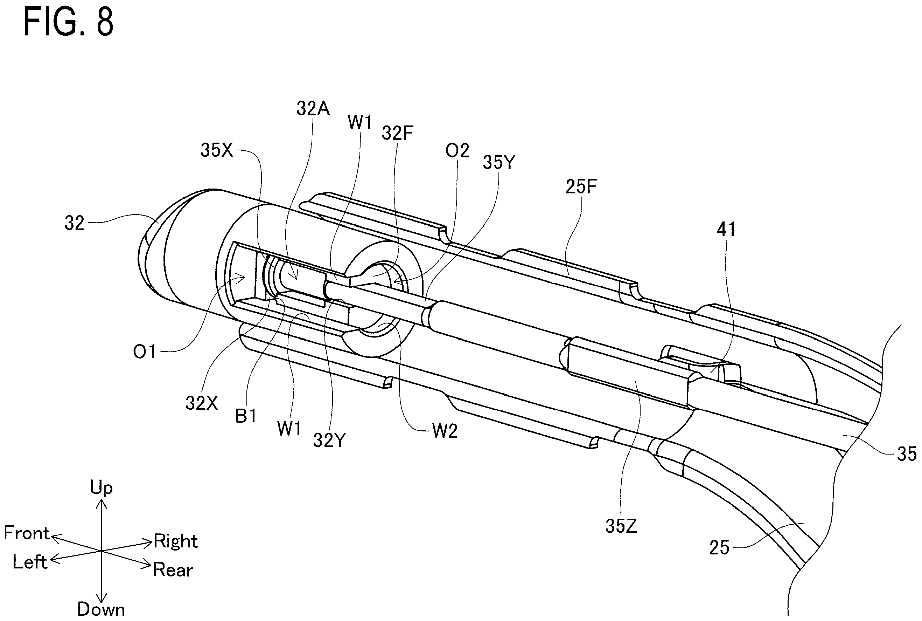

Thus, as illustrated in FIGs. 7 and 8, the front end part 35 A of the release rod 35 is attached to the slant knob member 32. The release rod 35 is extended to the rear side of the slant knob member 32 from the loosely fitting part for rotation stop 32Y of the slant knob member 32 through the fitting part 32F and the second opening part O2. Incidentally, in FIGs. 7 and 8, the compression coil spring 31 is omitted.

Next, the lid member 33 forming the release knob 19 is engaged with the housing part 32A of the slant knob member 32 from the upper side (the left side in FIG. 3).

Specifically, for example, the insertion part 33D in the second closure part 33C of the lid member 33 is inserted into the rotation stop part 35Y of the release rod 35 extending from the loosely fitting part for rotation stop 32Y of the slant knob member 32 from the upper side (the left side in FIG. 3). Thus, a tip of the protruding wall part 33F in the second closure part 33C of the lid member 33 is directed toward the second opening part O2 of the slant knob member 32, and the first closure part 33B of the lid member 33 is superimposed on the end edge of the first opening part 01 of the slant knob member 32. Thereafter, the protruding wall part 33 F in the second closure part 33C of the lid member 33 is fitted into the fitting part 32F of the slant knob member 32 by moving the lid member 33 to the front direction so that the first closure part 33B of the lid member 3 is along the end edge of the first opening part O1 of the slant knob member 32.

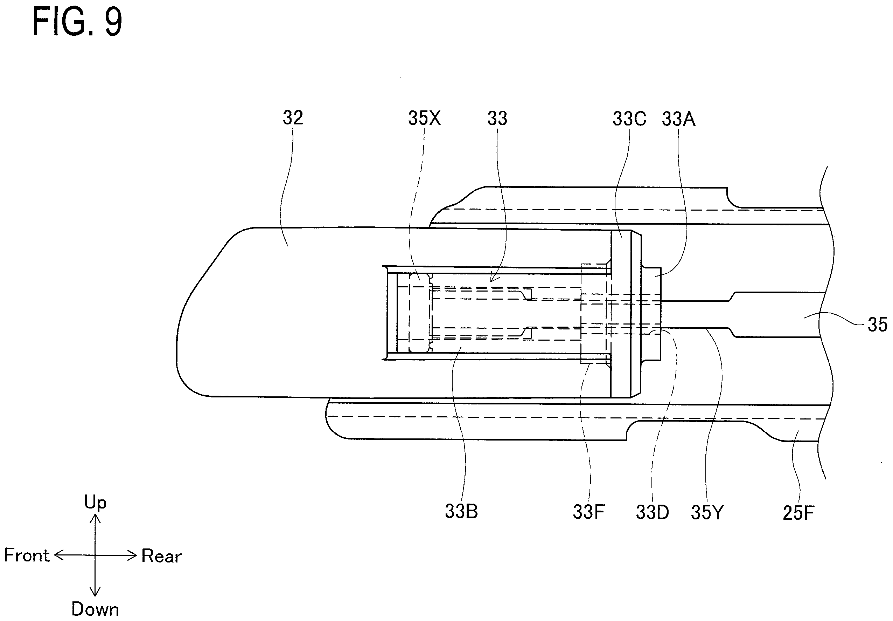

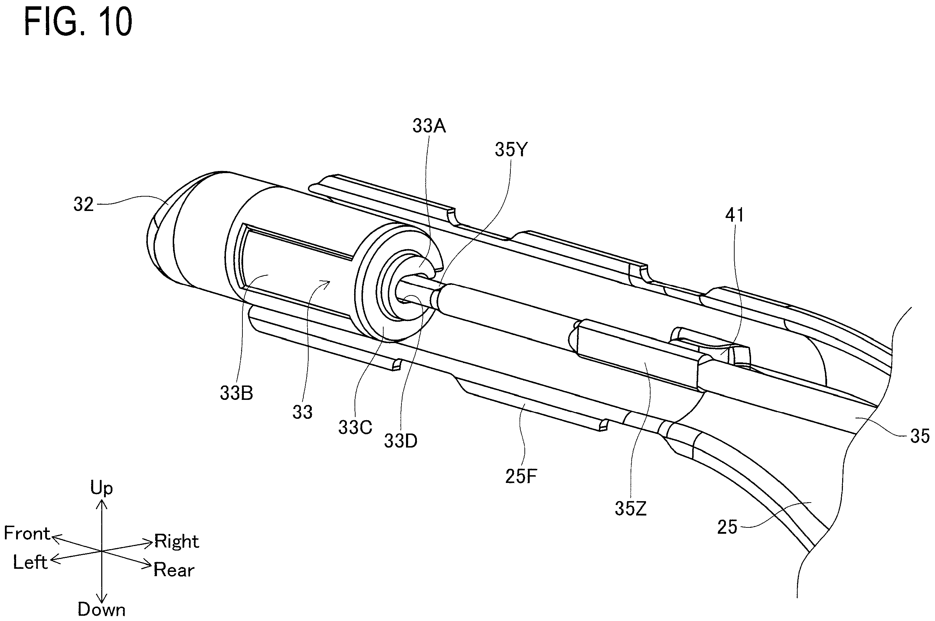

Thus, as illustrated in FIGs. 9 and 10, the release knob 19 formed by the slant knob member 32 and the lid member 33 is assembled, and the front end part 35 A of the release rod 35 is attached to the release knob 19. The first closure part 33B of the lid member 33 covers the loosely fitting part for retention 32X and the loosely fitting part for rotation stop 32Y in the slant knob member 32 from the first opening part 01 of the slant knob member 32 by closing the first opening part 01 of the slant knob member 32. The second closure part 33 C of the lid member 33 covers the loosely fitting part for rotation stop 32Y in the slant knob member 32 from the second opening part O2 of the slant knob member 32 by closing the second opening part O2 of the slant knob member 32. The release rod 35 is extended from the insertion part 33D in the second closure part 33C of the lid member 33. Incidentally, in FIGs. 9 and 10, the compression coil spring 31 is omitted.

Subsequently, the compression coil spring 31 in a state inserted by the release rod 35 is arranged on the first half-cut body 25. Specifically, an operator mounts the first end part of the compression coil spring 31 to the spring receiving part 33A of the lid member 33 from the upper side of the first half-cut body 25 disposed on the worktable, and the compression coil spring 31 is disposed in the first half-cut body 25 in a slightly compressed state by engaging the second end part of the compression coil spring 31 with the locking pawl 41. In this manner, the compression coil spring 31 is disposed between the spring receiving part 33A of the lid member 33 and the locking pawl 41 of the first half-cut body 25. Accordingly, a restoration force is applied to the release knob 19 by placing the compression coil spring 31 between the spring receiving part 33A of the lid member 33 and the locking pawl 41 of the first half-cut body 25.

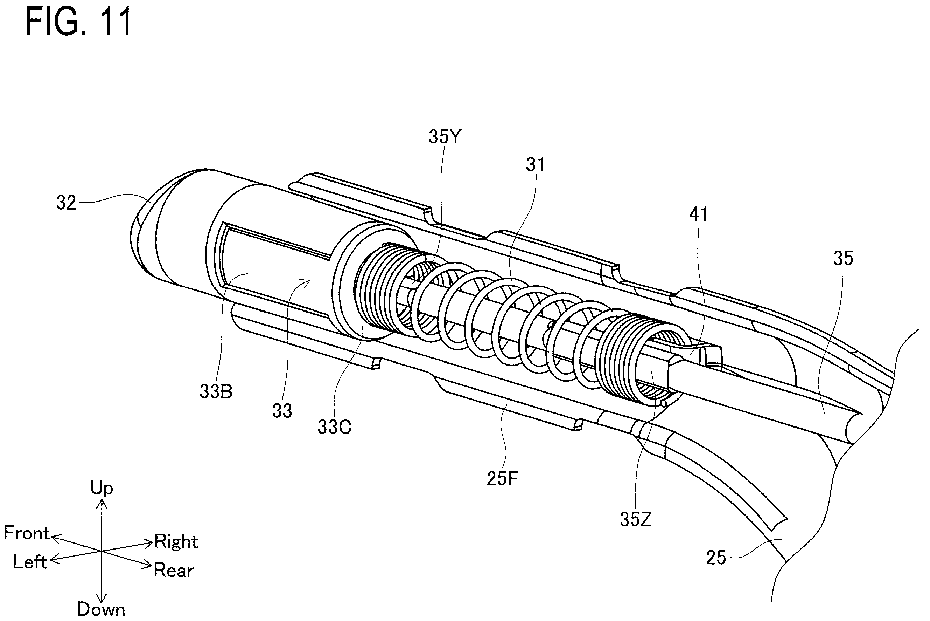

At this time, as illustrated in FIG. 11, a tip end part of the locking pawl 41 of the first half-cut body 25 is in a state facing the avoidance part 35Z of the release rod 35 in a substantial parallel relationship. Accordingly, a state where the pawl 41 of the first half-cut body 25 is separated from the avoidance part 35Z of the release rod 35 is maintained. Thus, the locking pawl 41 of the first half-cut body 25 is prevented form hitting the release rod 35.

In this manner, the second half-cut body 27 is disposed so as to be laminated from the upper side (the left side in FIG. 3) in a state where the release rod 35 and the release knob 19 etc. are disposed on the first half-cut body 25. Thus, according to the parking brake lever device 11, the components such as the release rod 35 etc. can be disposed inside the first half-cut body 25 and the second half-cut body 27. At this time, the second half-cut body 27 is laminated to the release rod 35 etc. disposed on the first half-cut body 25 in a state where a right side surface (inner surface) of the second half-cut body 27 is directed to the lower side (right side in FIG. 3).

Incidentally, although omitted in the above explanation, the pole 37 and the sector 13 to which the ratchet 39 is fixed are disposed before laminating the second half-cut body 27 on the first half-cut body 25. These components can be disposed before laminating the second half-cut body 27, before disposing the release rod 35, the release knob 19, and the compression coil spring 31, or after disposing the release rod 35, the release knob 19, and the compression soil spring 31.

The assembly operation of the parking brake lever device 11 is completed by caulking the support pins P1, P2, P3, and P4 in a state where each of the components, i.e. the release rod 35 and the release knob 19 etc. is disposed between the first half-cut body 25 and the second half-cut body 27.

### 1.-6 Summary

In the parking brake lever device 11 according to the first embodiment, when the front end part 35A of the release rod 35 is attached to the release knob 19, the retaining part 35X of the release rod 35 is pushed into the loosely fitting part for retention 32X in the slant knob member 32, and the rotation stop part 35Y of the release rod 35 is also pushed into the loosely fitting part for rotation stop 32 Y in the slant knob member 32. Thus, since the release rod 35 can be assemble to the slant knob member 32 by hand, it need not to use an equipment for the assembly. Accordingly, the number of assembled steps and the equipment cost for assembling the release rod 35 having the circular cross section and the release knob 19 can be reduced.

Further, the release knob 19 can be prevented from pulling out from the release rod 35 having the circular cross section as well as rotating with respect to the release rod 35. Especially, the release knob 19 what is called a slant knob can be assembled to the release rod 35 having the circular cross section in a correct posture by preventing the release knob 19 from rotating.

In the parking brake lever device 11 according to the first embodiment, since the rotation stop part 35Y of the release rod 35 is the flat plate shape, the rotation stop part 35Y of the release rod 35 having the circular cross section can be easily formed by press working a part of the release rod 35. This technical feature can be also applied to the avoidance part 35Z of the release rod 35.

In the parking brake lever device 11 according to the first embodiment, since the first bead part B 1 made of a resin is crushed by the release rod 35 when the front end part 35A of the release rod 35 is attached to the release knob 19, rattling of the release knob 19 can be prevented.

In the parking brake lever device 11 according to the first embodiment, since the first bead part B 1 provided in the loosely fitting part for retention 32X in the release knob 19 is crushed by the retaining part 35X of the release rod 35, rattling of the release knob 19 in the axial direction of the release rod 35 can be prevented.

In the parking brake lever device 11 according to the first embodiment, when the lid member 33 is engaged with slant knob member 32 to which the release rod 35 is attached, the first closure part 33B of the lid member 33 covers the loosely fitting part for retention 32X and the loosely fitting part for rotation stop 32 Y in the slant knob member 32, and the rotation stop part 35Y of the release rod 35 is inserted into the insertion part 33D in the second closure part 33C of the lid member 33. As a result, the lid member 33 engaged with the slant knob member 32 can restrict the attaching position of the slant knob member 32 to the release rod 35 and can also prevent the slant knob member 32 from pulling out from the release rod 35.

In the parking brake lever device 11 according to the first embodiment, since the protruding wall part 33F of the lid member 33 is fitted into the fitting part 32 F of the slant knob member 32, rattling of the lid member 33 can be prevented. Further, an operator can confirm whether the lid member 33 is correctly assembled to the slant knob member 32 based on a noise or a vibration etc. generated at the time of fitting completion.

### 2. The Second Embodiment

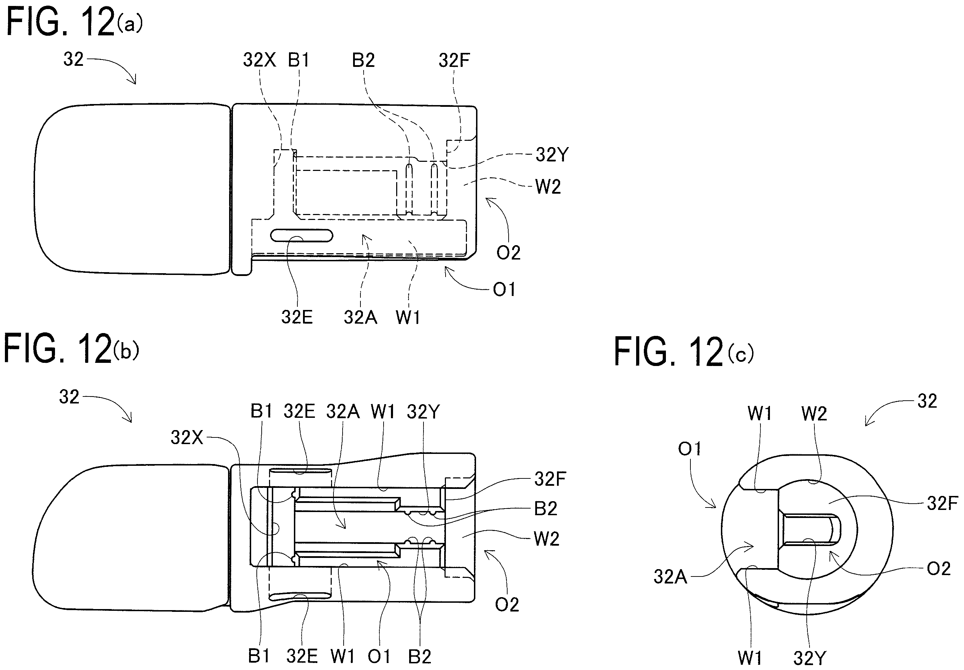

Hereinafter, the second embodiment of a parking brake lever device according to the present invention will be described in detail with reference to FIGs. 12 to 18. Incidentally, in the below explanation, the same reference signs are followed in parts in common with the above-mentioned first embodiment, and the detailed description will be omitted.

As illustrated in FIG. 12, a pair of engagement parts 32E, 32E formed into an elongate hole shape is provided in the slant knob member 32. The each engagement part 32E, 32E passes through the first inner wall surface W1, and communicates the housing part 32A that is the inside of the slant knob member 32 with the outside. The loosely fitting part for rotation stop 32 Y is provided with four second bead parts B2 in the housing part 32A of the slant knob member 32. The each second bead part B2 is formed into a linear shape and is provided so as to slenderly protrude on a wall surface forming the loosely fitting part for rotation stop 32 Y in the wall surface direction. The each second bead part B2 is made of a resin same as the slant knob member 32, and is formed simultaneously with the time of forming the slant knob member 32.

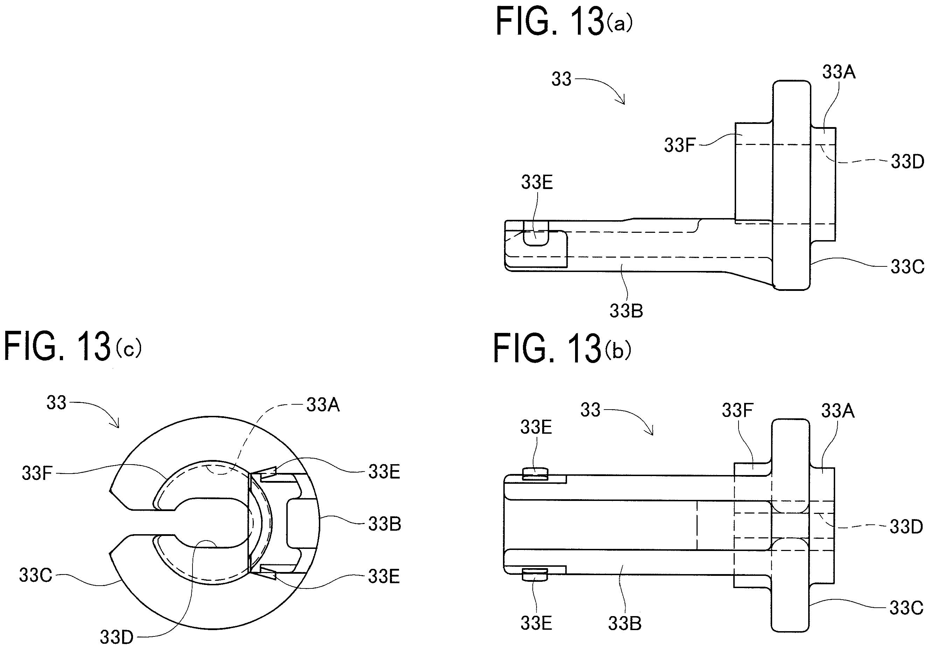

As illustrated in FIG. 13, a pair of engagement pawls 33E, 33E is provided at a tip of the first closure part 33B in the lid member 33. The each engagement pawl 33E, 33E is formed toward the outside of the lid member 33.

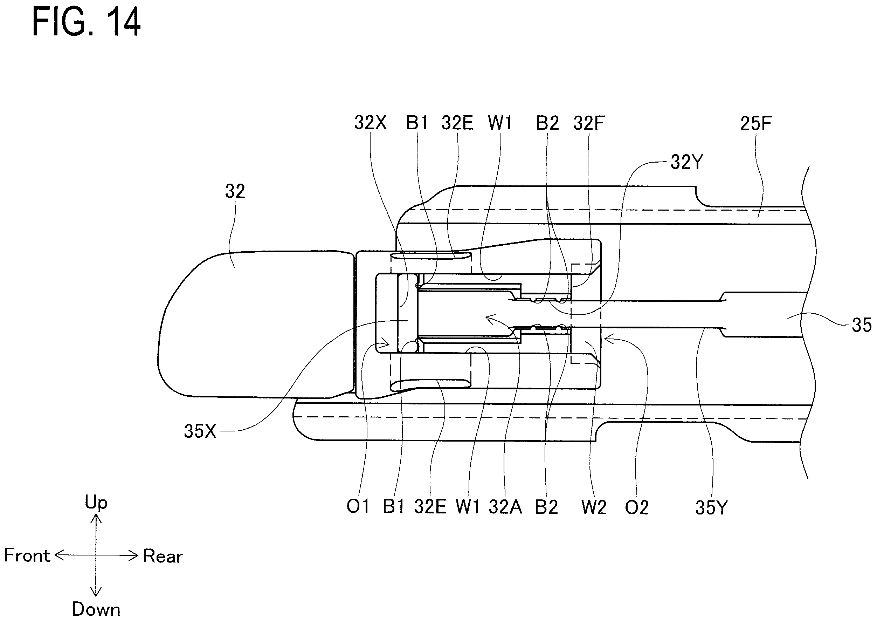

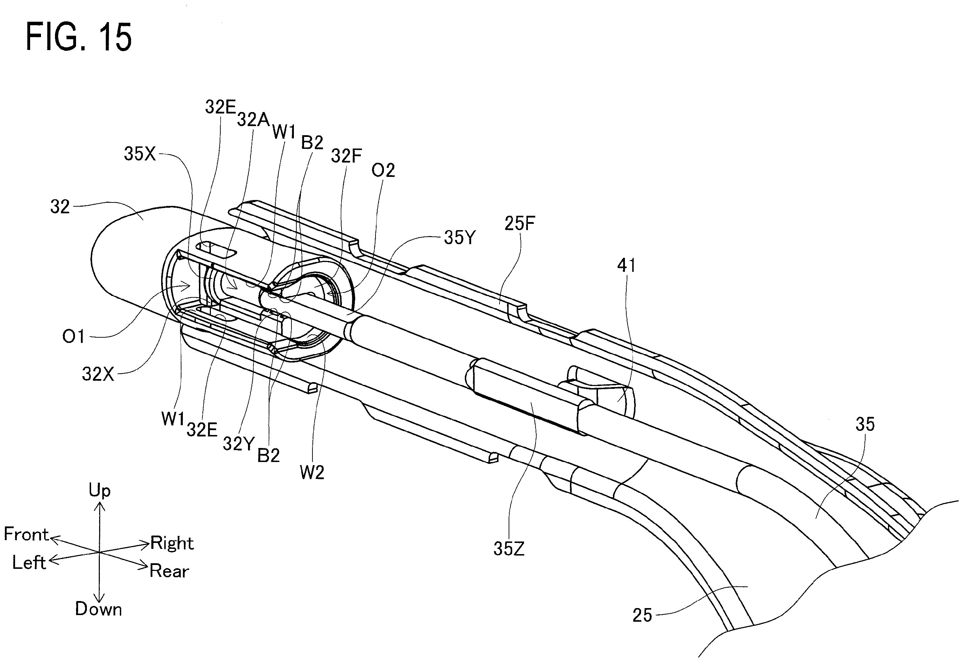

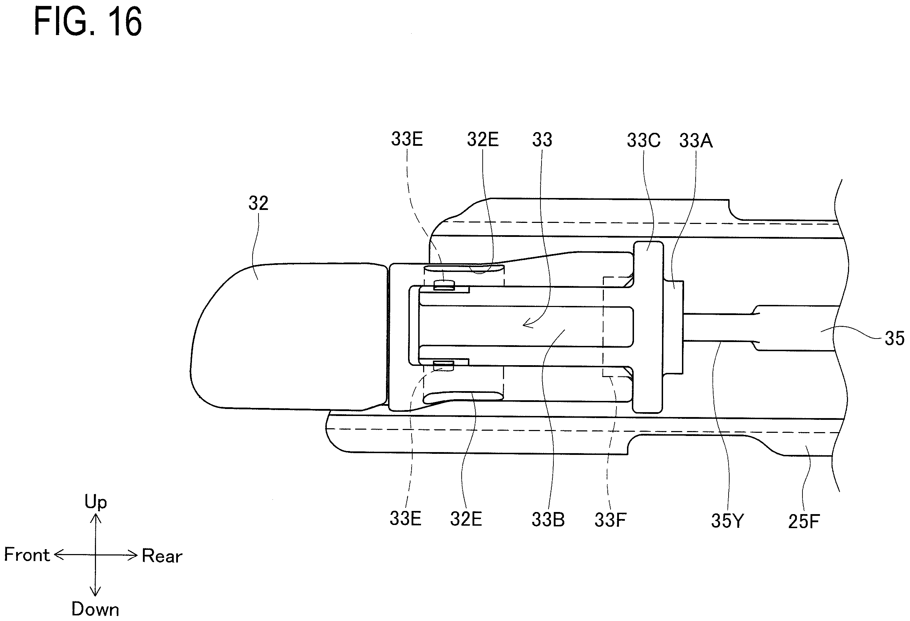

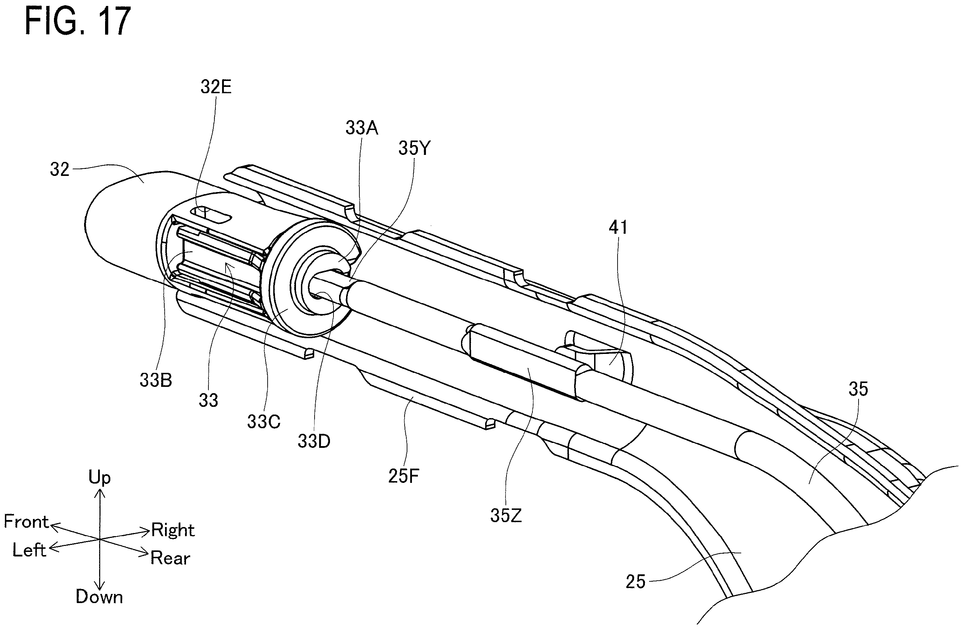

In the second embodiment, as illustrated in FIGs. 14 and 15, the front end part 35A of the release rod 35 is attached to the slant knob member 32 forming the release knob 19 as in the case with the first embodiment. However, when the rotation stop part 35Y of the release rod 35 is pushed into the loosely fitting part for rotation stop 32Y, the each second bead part B2 of the loosely fitting part for rotation stop 32Y is crushed by the rotation stop part 35Y of the release rod 35. In the slant knob member 32, the pair of engagement parts 32E, 32E is in a state directed upward or downward. Subsequently, as illustrated in FIGs. 16, 17, the lid member 33 forming the release knob 19 is engaged with the housing part 32A of the slant knob member 32 as in the case with the first embodiment. However, the pair of engagement pawls 33E, 33E of the lid member 33 is engaged into the each engagement part 32E, 32E of the slant knob member 32.

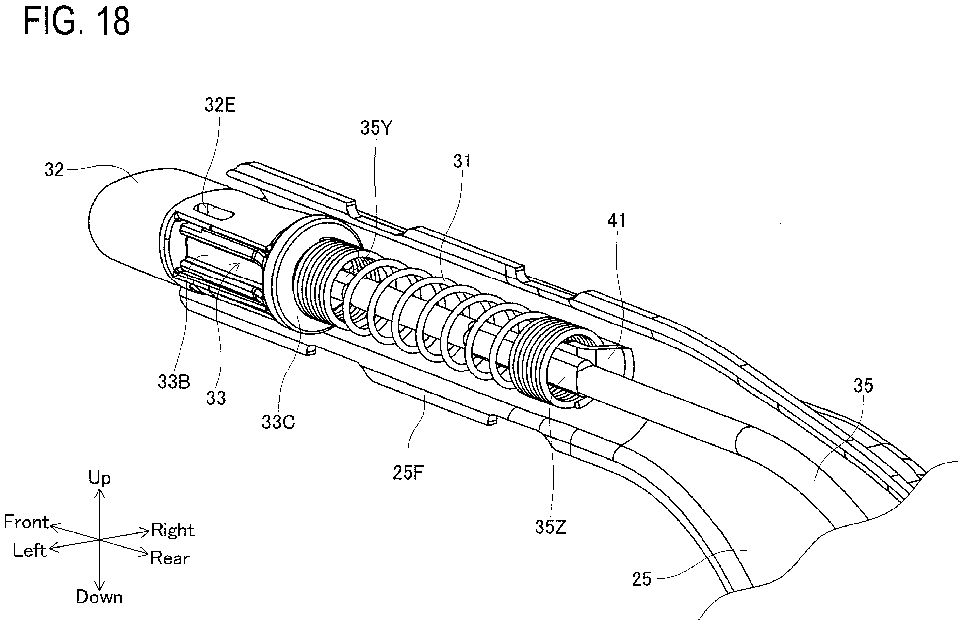

Further, as illustrated in FIG. 18, the compression coil spring 31 inserted by the release rod 35 is arranged as in the case with the first embodiment.

As described above, in the parking brake lever device 11 according to the second embodiment, the following technical effects are brought out in addition to the technical effects in the first embodiment.

In the parking brake lever device 11 according to the second embodiment, since the each second bead part B2 provided in the loosely fitting part for rotation stop 32Y in the release knob 19 is crushed by the rotation stop part 35Y of the release rod 35, rattling of the release knob 19 in the circumferential direction of the release rod 35 can be prevented.

In the parking brake lever device 11 according to the second embodiment, since the each of the engagement pawls 33E, 33E of the lid member 33 is engaged into the each of the engagement parts 32E, 32E of the slant knob member 32 and the protruding wall part 33F of the lid member 33 is fitted into the fitting part 32 F of the slant knob member 32, rattling of the lid member 33 can be prevented. Further, an operator can confirm whether the lid member 33 is correctly assembled to the slant knob member 32 based on a noise or a vibration etc. generated at the time of engagement completion or at the time of fitting completion.

### 3. Others

Incidentally, in the present embodiment, the engagement part 32E is one example of "a first engagement part". The fitting part 32 F is one example of "a second engagement part". The lid member 33 is one example of "a lid part". The engagement pawl 33E is one example of "a first engaged part". The protruding wall part 33F is one example of "a second engaged part". Each of the first bead part B1 and the second bead part B2 is one example of "a bead part".

### 4. Variation

For example, the cross section of the rotation stop part 35Y of the release rod 35 may be polygonal or elliptical etc. as long as the cross section is non-circular.

The retaining part 35X of the release rod 35 may be provided at a position other than the front end surface of the release rod 35 as long as the retaining part 35X can be attached to the slant knob member 32.

The release knob 19 is not limited to what is called a slant knob, for example, the release knob 19 may have a cylindrical shape in which an attaching position in the circumferential direction of the release rod 35 is not restricted.

### LIST OF REFERENCE NUMERALS

- 11: parking brake lever device
- 19: release knob
- 32: slant knob member
- 32E: engagement part
- 32F: fitting part
- 32X: loosely fitting part for retention
- 32Y: loosely fitting part for rotation stop
- 33: lid member
- 33B: first closure part
- 33C: second closure part
- 33D: insertion part
- 33E: engagement pawl
- 33F: protruding wall part
- 35: release rod
- 35A: front end part
- 35X: retaining part
- 35Y: rotation stop part
- B1: first bead part
- B2: second bead part
- O1: first opening part of the slant knob member
- O2: second opening part of the slant knob member
- W1: first inner wall surface of the slant knob member
- W2: second inner wall surface of the slant knob member

## Claims

1. A parking brake lever device (11) comprising:
a release rod (35) configured to include a circular cross section;
a rotation stop part (35Y) configured to include a non-circular cross section and formed in a part of the release rod (35);
a retaining part (35X) provided to the release rod (35) so as to project in a radial direction of the release rod (35);
a release knob (19) to which a front end part (35A) of the release rod (35) is attached;
a loosely fitting part for rotation stop (32Y) provided in the release knob (19) and loosely fitting the rotation stop part (35Y) of the release rod (35);
a loosely fitting part for retention (32X) provided in the release knob (19) and loosely fitting the retaining part (35X) of the release rod (35), and
a lid part (33) to be engaged with the release knob (19), **characterized in that**
the lid part (33) includes:
a first closure part (33B) configured to cover the loosely fitting part for rotation stop (32Y) and the loosely fitting part for retention (32X) in the release knob (19) from a first opening part (O1) side by closing the first opening part (O1) of the release knob (19) into which the front end part (35A) of the release rod (35) is inserted when the front end part (35A) of the release rod (35) is attached to the release knob (19); and
a second closure part (33C) continuously provided to the first closure part (33B) in a bent state and closing a second opening part (O2) of the release knob (19) toward which the release rod (35) attached to the release knob (19) extends, and wherein
the second closure part (33C) includes an insertion part (33D) into which the release rod (35) is inserted.

2. The parking brake lever device (11) according to claim 1, wherein the release knob (19) comprises:
a first engaging part (32E) provided on a first inner wall surface (W1) arranged from an end edge of the first opening part (O1) toward the loosely fitting part for rotation stop (32Y) or the loosely fitting part for retention (32X); and
a second engaging part (32F) provided on a second inner wall surface (W2) arranged from an end edge of the second opening part (O2) toward the loosely fitting part for rotation stop (32Y) or the loosely fitting part for retention (32X), and wherein
the lid part (33) includes:
a first engaged part (33E) provided in the first closure part (33B) and engaged with the first engaging part (32E) of the release knob (19); and
a second engaged part (33F) provided in the second closure part (33C) and engaged with the second engaging part (32F) of the release knob (19).

## Patentansprüche

1. Feststellbremshebelvorrichtung (11), mit:
einer Freigabestange (35), die so konfiguriert ist, dass sie einen kreisförmigen Querschnitt aufweist;
einem Drehanschlagteil (35Y), das so gestaltet ist, dass es einen nicht kreisförmigen Querschnitt aufweist und in einem Teil der Freigabestange (35) ausgebildet ist;
einem Rückhalteteil (35X), das an der Freigabestange (35) so vorgesehen ist, dass es in einer radialen Richtung der Freigabestange (35) vorsteht;
einem Freigabeknopf (19), an dem ein vorderes Endteil (35A) der Freigabestange (35) befestigt ist;
einem lose passenden Teil (32Y) für einen Drehanschlag, das in dem Freigabeknopf (19) vorgesehen ist und lose in das Drehanschlagteil (35Y) der Freigabestange (35) gepasst ist;
einem lose passenden Teil (32X) zur Rückhaltung, das in dem Freigabeknopf (19) vorgesehen ist und lose auf das Rückhalteteil (35X) der Freigabestange (35) gepasst ist, und
einem Deckelteil (33), das mit dem Freigabeknopf (19) in Eingriff zu bringen ist,
**dadurch gekennzeichnet, dass**
das Deckelteil (33) hat:
ein erstes Verschlussteil (33B), das so konfiguriert ist, dass es das lose passende Teil (32Y) für den Drehanschlag und das lose passende Teil (32X) für die Rückhaltung in dem Freigabeknopf (19) von der Seite eines ersten Öffnungsteils (O1) abdeckt, indem es das erste Öffnungsteil (O1) des Freigabeknopfes (19) verschließt, in das das vordere Endteil (35A) der Freigabestange (35) eingeführt wird, wenn das vordere Endteil (35A) der Freigabestange (35) an dem Freigabeknopf (19) angebracht ist; und
ein zweites Verschlussteil (33C), das kontinuierlich an dem ersten Verschlussteil (33B) in einem gebogenen Zustand vorgesehen ist und ein zweites Öffnungsteil (O2) des Freigabeknopfes (19) verschließt, zu dem sich die an dem Freigabeknopf (19) angebrachte Freigabestange (35) erstreckt, und wobei
das zweite Verschlussteil (33C) ein Einführteil (33D) aufweist, in das die Freigabestange (35) eingeführt wird.

2. Feststellbremshebelvorrichtung (11) nach Anspruch 1, wobei der Löseknopf (19) umfasst:
ein erstes Eingriffsteil (32E), das an einer ersten Innenwandfläche (W1) vorgesehen ist, die von einer Endkante des ersten Öffnungsteils (O1) in Richtung des lose passenden Teils (32Y) für den Drehanschlag oder des des lose passenden Teils (32X) für die Rückhaltung angeordnet ist; und
ein zweites Eingriffsteil (32F), das an einer zweiten Innenwandfläche (W2) vorgesehen ist, die von einer Endkante des zweiten Öffnungsteils (O2) in Richtung des lose passenden Teils (32Y) für den Drehanschlag oder des lose passenden Teils (32X) für die Rückhaltung angeordnet ist, und wobei
das Deckelteil (33) umfasst:
ein erstes Eingriffsteil (33E), das in dem ersten Verschlussteil (33B) vorgesehen ist und mit dem ersten Eingriffsteil (32E) des Freigabeknopfes (19) in Eingriff steht; und
ein zweites Eingriffsteil (33F), das in dem zweiten Verschlussteil (33C) vorgesehen ist und mit dem zweiten Eingriffsteil (32F) des Freigabeknopfes (19) in Eingriff steht.

## Revendications

1. Dispositif de levier de frein de stationnement (11) comprenant :
une tige de libération (35) configurée pour comprendre une section transversale circulaire ;
une partie d'arrêt de rotation (35Y) configurée pour comprendre une section transversale non circulaire et formée dans une partie de la tige de libération (35) ;
une partie de retenue (35X) prévue sur la tige de libération (35) afin de faire saillie dans une direction radiale de la tige de libération (35) ;
un bouton de libération (19) auquel une partie d'extrémité avant (35A) de la tige de libération (35) est fixée ;
une partie de montage sans serrage pour l'arrêt de rotation (32Y) prévue dans le bouton de libération (19) et permettant de monter sans serrage la partie d'arrêt de rotation (35Y) de la tige de libération (35) ;
une partie de montage sans serrage pour la retenue (32X) prévue dans le bouton de libération (19) et permettant de monter, sans serrage, la partie de retenue (35X) de la tige de libération (35), et
une partie de couvercle (33) destinée à être mise en prise avec le bouton de libération (19),
**caractérisé en ce que** :
la partie de couvercle (33) comprend :
une première partie de fermeture (33B) configurée pour recouvrir la partie de montage sans serrage pour l'arrêt de rotation (32Y) et la partie de montage sans serrage pour la retenue (32X) dans le bouton de libération (19) à partir du côté de la première partie d'ouverture (O1) en fermant la première partie d'ouverture (O1) du bouton de libération (19) dans laquelle la partie d'extrémité avant (35A) de la tige de libération (35) est insérée, lorsque la partie d'extrémité avant (35A) de la tige de libération (35) est fixée au bouton de libération (19) ; et
une seconde partie de fermeture (33C) prévue de manière continue sur la première partie de fermeture (33B) dans un état plié et fermant une seconde partie d'ouverture (O2) du bouton de libération (19) vers laquelle la tige de libération (35) fixée au bouton de libération (19) s'étend, et dans lequel :
la seconde partie de fermeture (33C) comprend une partie d'insertion (33D) dans laquelle la tige de libération (35) est insérée.

2. Dispositif de levier de frein de stationnement (11) selon la revendication 1, dans lequel :
le bouton de libération (19) comprend :
une première partie de mise en prise (32E) prévue sur une première surface de paroi interne (W1) agencée à partir d'un bord d'extrémité de la première partie d'ouverture (O1) vers la partie de montage sans serrage pour l'arrêt de rotation (32Y) ou la partie de montage sans serrage pour la retenue (32X) ; et
une seconde partie de mise en prise (32F) prévue sur une seconde surface de paroi interne (W2) agencée à partir d'un bord d'extrémité de la seconde partie d'ouverture (O2) vers la partie de montage sans serrage pour l'arrêt de rotation (32Y) ou la partie de montage sans serrage pour la retenue (32X), et dans lequel
la partie de couvercle (33) comprend :
une première partie mise en prise (33E) prévue dans la première partie de fermeture (33B) et mise en prise avec la première partie de mise en prise (32E) du bouton de libération (19) ; et
une seconde partie mise en prise (33F) prévue dans la seconde partie de fermeture (33C) et mise en prise avec la seconde partie de mise en prise (32F) du bouton de libération (19) .
